# EUROPÄISCHE PATENTSCHRIFT

(11) **EP 3 861 412 B1**
(45) Veröffentlichungstag und Bekanntmachung des Hinweises auf die Patenterteilung: **25.03.2026**
(21) Anmeldenummer: 19765462.7
(22) Anmeldetag: 05.09.2019
(51) Int. Cl.: G05B 19/418, H04L 12/40, H04L 45/02

(54) **AGGREGATORVORRICHTUNG FÜR EINEN VEREINHEITLICHTEN ZUGRIFF AUF EINE MEHRZAHL VON NETZWERKSEGMENTEN EINES FELDBUSSYSTEMS**
AGGREGATOR APPARATUS FOR STANDARDIZED ACCESS TO A PLURALITY OF NETWORK SEGMENTS OF A FIELD BUS SYSTEM
DISPOSITIF AGRÉGATEUR POUR UN ACCÈS UNIFIÉ À UNE PLURALITÉ DE SEGMENTS DE RÉSEAU D'UN SYSTÈME DE BUS DE TERRAIN

(30) Priorität: 04.10.2018 DE 102018124466
(43) Veröffentlichungstag der Anmeldung: 11.08.2021
(73) Patentinhaber: Endress+Hauser Process Solutions AG, 4153 Reinach (CH)
(72) Erfinder: MAYER, Michael, 4104 Oberwil (CH); PÖSCHMANN, Axel, 4057 Basel (CH)
(74) Vertreter: Endress + Hauser Group Services (Deutschland) AG+Co. KG
(86) Internationale Anmeldenummer: PCT/EP2019/073746
(87) Internationale Veröffentlichungsnummer: WO 2020/069815

(56) Entgegenhaltungen:
- DE-A1- 102016 125 171
- US-A1- 2007 129 820
- SUZUKI KEITA ET AL: "Smart grid ADR aggregation delay model on large-scale distributed building HVAC facilities", IEEE PES ISGT EUROPE 2013, IEEE, 6 October 2013 (2013-10-06), pages 1 - 5, XP032550048, DOI: 10.1109/ISGTEUROPE.2013.6695472
- "Communication networks and systems for power utility automation - Part 80-3: Mapping to web protocols - Requirements and technical choices", IEC TR 61850-80-3:2015, IEC, 3, RUE DE VAREMBÉ, PO BOX 131, CH-1211 GENEVA 20, SWITZERLAND, 12 November 2015 (2015-11-12), pages 1 - 89, XP082009381

## Beschreibung

Die Erfindung betrifft eine Aggregatorvorrichtung sowie ein Feldbussystem, das eine Mehrzahl von Netzwerksegmenten sowie eine Aggregatorvorrichtung umfasst.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Viele Feldbussysteme bestehen aus einer Mehrzahl von separaten Netzwerksegmenten, die getrennt voneinander verwaltet werden. Durch eine derartige Unterteilung wird die Ausfallsicherheit des Gesamtsystems erhöht, weil bei einem Ausfall jeweils nur ein Netzwerksegment betroffen ist und die anderen Netzwerksegmente funktionsfähig bleiben. Der Nachteil derartiger Feldbussysteme ist, dass die Zugriffsberechtigungen für Hostrechner für die verschiedenen Netzwerksegmente separat eingerichtet werden müssen.

Aus US 2007/129820 A1 ist bereits eine integrierte Feldbus-Datenserver-Architektur bekannt.

Aufgabe der Erfindung ist es, in einem Feldbussystem mit einer Mehrzahl von Netzwerksegmenten den Zugriff auf die verschiedenen Netzwerksegmente zu vereinfachen. Gelöst wird diese Aufgabe durch die in den Ansprüchen 1 und 9 angegebenen Merkmale. Vorteilhafte Weiterentwicklungen der Erfindung sind in den Unteransprüchen angegeben.

Eine Aggregatorvorrichtung gemäß den Ausführungsformen der vorliegenden Erfindung ist dazu ausgelegt, eine Mehrzahl von ersten Datenverbindungen zu einer Mehrzahl von Feldzugangsgeräten auszubilden, wobei die Feldzugangsgeräte an eine Mehrzahl von unterschiedlichen Netzwerksegmenten eines Feldbussystems angeschlossen sind. Die Aggregatorvorrichtung ist dazu ausgelegt, mindestens eine zweite Datenverbindung zu mindestens einem Hostrechner auszubilden. Die Aggregatorvorrichtung ist dazu ausgelegt, über mindestens eine der zweiten Datenverbindungen von dem mindestens einen Hostrechner einen ersten Datenverkehr zu empfangen und den ersten Datenverkehr über mindestens eine der ersten Datenverbindungen zu einem Feldzugangsgerät desjenigen Netzwerksegments weiterzuleiten, in dem sich die jeweilige Feldbuskomponente, an die der erste Datenverkehr gerichtet ist, befindet. Außerdem ist die Aggregatorvorrichtung dazu ausgelegt, von einer Feldbuskomponente in einem der Netzwerksegmente über mindestens eine der ersten Datenverbindungen einen zweiten Datenverkehr zu empfangen und den zweiten Datenverkehr über mindestens eine der zweiten Datenverbindungen an mindestens einen der Hostrechner weiterzuleiten.

Die Aggregatorvorrichtung der vorliegenden Erfindung stellt einen zentralisierten Zugriff auf die Netzwerksegmente eines segmentierten Feldbussystems zur Verfügung. Die Aggregatorvorrichtung ist während des Betriebs über erste Datenverbindungen mit den Feldzugangsgeräten und über mindestens eine zweite Datenverbindung mit einem Hostrechner verbunden. Ein vom Hostrechner an eine bestimmte Feldbuskomponente gerichteter Datenverkehr wird durch die Aggregatorvorrichtung zu einem Feldzugangsgerät desjenigen Netzwerksegments geroutet, in dem sich die jeweilige Feldbuskomponente befindet. Bei der Feldbuskomponente kann es sich um ein Feldgerät, ein Gatewaygerät oder um eine andere Feldbuskomponente handeln. In umgekehrter Richtung empfängt die Aggregatorvorrichtung von einer Feldbuskomponente in einem Netzwerksegment einen Datenverkehr und leitet diesen Datenverkehr zu mindestens einem Hostrechner weiter. Dem Hostrechner wird durch die Aggregatorvorrichtung ein zentralisierter Zugriff auf die Feldzugangsgeräte der verschiedenen Netzwerksegmente ermöglicht. Die verschiedenen Netzwerksegmente können an demselben Standort angeordnet sein, sie können aber auch an mehreren voneinander entfernten Standorten angeordnet sein.

Durch die Verwendung einer vorgeschalteten Aggregatorvorrichtung wird der administrative Aufwand in einem mehrere Feldbussegmente umfassenden Feldbussystem verringert. Bisher war es erforderlich, den Hostrechner auf jedem Feldzugangsgerät einzeln zu registrieren und die Firewall auf jedem Feldzugangsgerät so zu konfigurieren, dass Zugriffe des Hostrechners auf das jeweilige Netzwerksegment zugelassen werden. Nachdem viele Servicetechniker für ihren Hostrechner Zugriffsberechtigungen für die verschiedenen Netzwerksegmente des Feldbussystems erteilt bekommen, war der administrative Aufwand beträchtlich. Im Gegensatz dazu wird bei der erfindungsgemäßen Lösung jeder Hostrechner nur einmal zentral an der Aggregatorvorrichtung registriert. Erfindungsgemäß ist auf der Aggregatorvorrichtung eine Firewall vorgesehen, welche dann so konfiguriert wird, dass ein bestimmter Hostrechner Zugriff auf die Aggregatorvorrichtung und damit auch auf sämtliche Feldzugangsgeräte der Netzwerksegmente erhält. Alternativ dazu könnte ein Hostrechner oder ein Benutzer auch lediglich Zugriffsrechte für bestimmte Netzwerksegmente und/oder für bestimmte Feldbuskomponenten und/oder für bestimmte Funktionalitäten von Feldbuskomponenten eingeräumt bekommen. Derartige Zugriffsberechtigungen können beispielsweise mittels eines Berechtigungsprofils festgelegt werden, das für einen bestimmten Hostrechner oder einen bestimmten Benutzer angelegt wird. Da die jeweilige Zugriffsberechtigung nur einmal zentral auf der Aggregatorvorrichtung eingerichtet werden muss, ist der administrative Aufwand deutlich geringer als bei bisherigen Lösungen. Außerdem wird der Sicherheitsstandard verbessert, weil beispielsweise sämtliche Konfigurationsänderungen nur an einer zentralen Firewall und nicht wie bisher an vielen dezentralen Firewalls vorgenommen werden, so dass die Übersichtlichkeit verbessert wird.

Für den Servicetechniker, der über seinen Hostrechner auf eine bestimmte Feldbuskomponente innerhalb des Feldbussystems zugreifen will, wird der Zugriff auf diese Feldbuskomponente durch die Aggregatorvorrichtung vereinfacht. Durch die Aggregatorvorrichtung wird der vom Hostrechner empfangene erste Datenverkehr automatisch zu dem Feldzugangsgerät desjenigen Netzwerksegments geroutet, in dem sich die angesprochene Feldbuskomponente befindet. Der Servicetechniker muss daher lediglich über die Feldzugangssoftware seines Hostrechners die gewünschte Feldbuskomponente auswählen. Der Servicetechniker muss sich nicht mit der Frage auseinandersetzen, in welchem Netzwerksegment sich die jeweilige Feldbuskomponente befindet, weil das Routing automatisch von der Aggregatorvorrichtung durchgeführt wird. Dies ist insbesondere bei großen Automatisierungsnetzwerken, die eine Vielzahl von Feldgeräten, Gatewaygeräten und sonstigen Feldbuskomponenten umfassen, von Vorteil. Vom Hostrechner aus ist also ein vereinheitlichter Zugriff auf sämtliche Feldbuskomponenten des gesamten Feldbussystems möglich.

Es ist von Vorteil, wenn es sich bei dem ersten Datenverkehr um einen Datenverkehr zur Parametrierung, Konfiguration und Zustandsüberwachung einer Feldbuskomponente handelt. Vom Hostrechner aus können Parameter der jeweiligen Feldbuskomponente ausgelesen und verändert werden. Vorzugsweise umfasst der zweite Datenverkehr mindestens einen Parameterwert der jeweiligen Feldbuskomponente.

Vorzugsweise sind auf Seiten der Aggregatorvorrichtung Routinginformationen gespeichert. Derartige Routinginformationen geben beispielsweise an, zu welchem Netzwerksegment ein an eine bestimmte Feldbuskomponente gerichteter erster Datenverkehr geroutet werden muss. Damit wird die Aggregatorvorrichtung in die Lage versetzt, den vom Hostrechner empfangenen ersten Datenverkehr automatisch zu demjenigen Netzwerksegment zu routen, in dem sich die jeweilige Feldbuskomponente befindet.

Ein Feldbussystem gemäß den Ausführungsformen der Erfindung umfasst eine Mehrzahl von Netzwerksegmenten, wobei jedes Netzwerksegment mindestens ein Feldzugangsgerät, mindestens einen Feldbus und mindestens eine Feldbuskomponente umfasst. Dabei ist das mindestens eine Feldzugangsgerät dazu ausgelegt, einen Zugriff auf Feldbuskomponenten in dem jeweiligen Netzwerksegment zu ermöglichen. Darüber hinaus umfasst das Feldbussystem eine Aggregatorvorrichtung wie oben beschrieben, welche dazu ausgelegt ist, eine Mehrzahl von ersten Datenverbindungen zu zumindest einigen der Feldzugangsgeräte in unterschiedlichen Netzwerksegmenten auszubilden.

Nachfolgend ist die Erfindung anhand von in der Zeichnung dargestellten Ausführungsbeispielen näher erläutert. Es zeigen:
Figur 1 ein Feldbussystem, das eine Mehrzahl von Netzwerksegmenten umfasst, wobei die Netzwerksegmente Feldzugangsgeräte umfassen, über die auf die Feldbuskomponenten in den einzelnen Netzwerksegmenten zugegriffen werden kann;
Figur 2 ein Feldbussystem, das eine Mehrzahl von Netzwerksegmenten umfasst, wobei der Zugriff auf die Feldzugangsgeräte in den einzelnen Netzwerksegmenten über eine vorgeschaltete Aggregatorbox erfolgt;
Figur 3 einen Hostrechner, auf dem eine Gerätezugriffssoftware installiert ist, wobei in der Gerätezugriffssoftware eine Mehrzahl von Treiberstrukturen für den Zugriff auf unterschiedliche Netzwerksegmente vorgesehen ist.

Innerhalb von modernen Industrieanlagen werden unterschiedliche Funktionsbereiche häufig durch mehrere separate Netzwerksegmente abgedeckt. Diese Aufteilung des Feldbussystems in separate Netzwerksegmente erfolgt in erster Linie aus organisatorischen Gründen, beispielsweise, um den modularen Aufbau der Industrieanlage abzubilden oder um Zuständigkeiten für verschiedene Netzwerksegmente klar zu definieren. Hinzu kommt, dass durch die Aufteilung in mehrere separate Netzwerksegmente die Ausfallsicherheit der gesamten Anlage verbessert wird. Wenn beispielsweise ein bestimmtes Automatisierungsnetzwerk ausfällt, dann betrifft dieser Ausfall lediglich einen Teil der Anlage, während die restlichen Teile der Industrieanlage funktionsfähig bleiben.

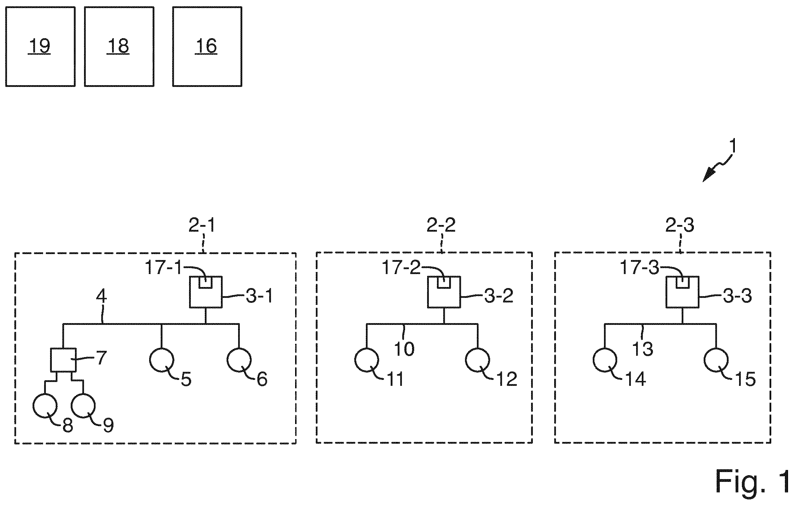

In Figur 1 ist ein Feldbussystem 1 gezeigt, das drei unterschiedliche Netzwerksegmente 2-1, 2-2 und 2-3 umfasst. Im ersten Netzwerksegment 2-1 ist ein Feldzugangsgerät 3-1 vorgesehen, über das von einem Hostrechner aus auf die Feldbuskomponenten des ersten Netzwerksegments 2-1 zugegriffen werden kann. Das Feldzugangsgerät 3-1 ist an einen Feldbus 4 angeschlossen, wobei an den Feldbus 4 darüber hinaus zwei Feldgeräte 5 und 6 sowie ein Gatewaygerät 7 angeschlossen sind. Mit dem Gatewaygerät 7 sind zwei Feldgeräte 8 und 9 verbunden.

Das zweite Netzwerksegment 2-2 umfasst ein Feldzugangsgerät 3-2, über das auf die Feldbuskomponenten des zweiten Netzwerksegments 2-2 zugegriffen werden kann. Das Feldzugangsgerät 3-2 ist mit einem Feldbus 10 verbunden, wobei an den Feldbus 10 außerdem die beiden Feldgeräte 11 und 12 angeschlossen sind.

Das dritte Netzwerksegment 2-3 umfasst ein Feldzugangsgerät 3-3, über das auf die Feldbuskomponenten des dritten Netzwerksegments 2-3 zugegriffen werden kann. Das Feldzugangsgerät 3-3 ist an einen Feldbus 13 angeschlossen, an den darüber hinaus die beiden Feldgeräte 14 und 15 angeschlossen sind.

Insofern ist für jedes der drei Netzwerksegmente 2-1, 2-2 und 2-3 ein separates Feldzugangsgerät 3-1, 3-2, 3-3 vorgesehen. Zur Parametrierung, Konfigurierung und Zustandsüberwachung der Feldbuskomponenten innerhalb eines jeweiligen Netzwerksegments 2-1, 2-2, 2-3 kann ein externer Hostrechner 16 über das jeweilige Feldzugangsgerät 3-1, 3-2, 3-3 auf die jeweilige Feldbuskomponente innerhalb des Netzwerksegments zugreifen.

Die Parametrierung, Konfiguration und Zustandsüberwachung der Feldgeräte eines Feldbusnetzwerks erfolgt mittels einer auf dem Hostrechner 16 installierten Gerätezugriffssoftware. Bei der Gerätezugriffssoftware kann es sich beispielsweise um eine Rahmenapplikation gemäß einem der Standards FDT, FDT2, FDI Device Packages, OPC Unified Architecture etc. handeln, in die die benötigten Treiber für die verschiedenen Feldbuskomponenten eingebunden werden können. Über die Gerätezugriffssoftware kann auf die verschiedenen Feldbuskomponenten der Netzwerksegmente 2-1, 2-2, 2-3 zugegriffen werden. Insbesondere können von der Gerätezugriffssoftware aus die Parameter der verschiedenen Komponenten der Netzwerksegmente 2-1, 2-2, 2-3 ausgelesen, dargestellt und verändert werden. Darüber hinaus ermöglicht die Gerätezugriffssoftware eine Zustandsüberwachung (Condition Monitoring) der Komponenten der Netzwerksegmente 2-1, 2-2, 2-3. Der für diese Aufgaben erforderliche Datenaustausch wird in der Regel über den sogenannten azyklischen Datenverkehr abgewickelt.

Um vom Hostrechner 16 aus auf die verschiedenen Feldbussegmente 2-1, 2-2, 2-3 zugreifen zu können, ist es jedoch erforderlich, den Hostrechner 16 auf jedem der Feldzugangsgeräte 3-1, 3-2, 3-3 zu registrieren. Insbesondere ist es erforderlich, die jeweils auf den Feldzugangsgeräten 3-1, 3-2, 3-3 installierte Firewall 17-1, 17-2, 17-3 so zu konfigurieren, dass Zugriffe des Hostrechners 16 auf das jeweilige Netzwerksegment zugelassen und nicht von der Firewall abgeblockt werden. Allerdings sind neben dem Hostrechner 16 in der Regel noch eine Vielzahl weiterer Hostrechner 18, 19 im Einsatz, wobei es sich bei den Hostrechnern beispielsweise um stationäre Rechner, aber auch um Laptops, Mobilgeräte, Tablets oder Smartphones handeln kann. Nachdem in der Regel jeder Servicetechniker zum Parametrieren, Konfigurieren und zur Zustandsüberwachung der Feldgeräte einen eigenen Hostrechner besitzt, ist es erforderlich, einer Vielzahl von unterschiedlichen Hostrechnern 16, 18, 19 Zugriff auf die Netzwerksegmente 2-1, 2-2, 2-3 einzuräumen. Um unberechtigte Zugriffe auf die Netzwerksegmente zuverlässig zu verhindern, ist es daher erforderlich, die Konfiguration der jeweiligen Firewall 17-1, 17-2, 17-3 stets auf dem aktuellen Stand zu halten und an die aktuell im Einsatz befindlichen Hostrechner 16, 18, 19 anzupassen. Insofern wird durch die Segmentierung eines Automatisierungssystems in eine Vielzahl von Netzwerksegmenten 2-1, 2-2, 2-3 ein hoher administrativer Aufwand erzeugt. Dies kann in der Praxis beispielsweise dazu führen, dass Sicherheitsmaßnahmen komplett deaktiviert oder vom Hersteller überhaupt nicht implementiert werden.

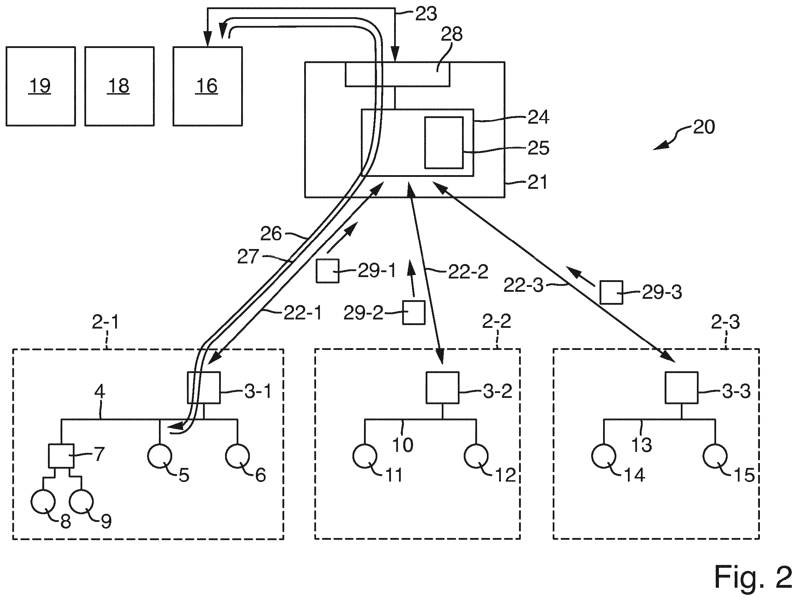

Bei der erfindungsgemäßen Lösung wird vorgeschlagen, eine den Feldzugangsgeräten 3-1, 3-2, 3-3 vorgeschaltete Aggregatorbox vorzusehen, die den Hostrechnern einen vereinheitlichten Zugriff auf die verschiedenen Netzwerksegmente erlaubt. In Figur 2 ist ein Feldbussystem 20 gezeigt, das eine derartige Aggregatorbox 21 umfasst. Die Aggregatorbox 21 ist über eine Datenverbindung 22-1 mit dem Feldzugangsgerät 3-1 des ersten Netzwerksegments 2-1, über eine Datenverbindung 22-2 mit dem Feldzugangsgerät 3-2 des zweiten Netzwerksegments 2-2 und über eine Datenverbindung 22-3 mit dem Feldzugangsgerät 3-3 des dritten Netzwerksegments 2-3 verbunden. Vorzugsweise sind die Datenverbindungen 22-1, 22-2, 22-3 zwischen der Aggregatorbox 21 und den Feldzugangsgeräten 3-1, 3-2, 3-3 als Ethernet-Verbindungen realisiert. Jede der Datenverbindungen 22-1 bis 22-3 kann entweder als drahtgebundene Datenverbindung oder aber als drahtlose Datenverbindung aufgesetzt werden. Dabei ist es möglich, einige der Datenverbindungen als drahtgebundene und andere als drahtlose Datenverbindungen aufzusetzen.

Darüber hinaus sind an die Aggregatorbox 21 ein oder mehrere Hostrechner 16, 18, 19 anschließbar. Bei dem in Figur 2 gezeigten Beispiel ist die Aggregatorbox 21 über eine Datenverbindung 23 mit dem Hostrechner 16 verbunden, wobei es sich bei der Datenverbindung 23 vorzugsweise um eine drahtgebundene oder drahtlose Ethernet-Verbindung handeln kann. Mittels des Hostrechners 16 kann über die Aggregatorbox 21 auf Feldbuskomponenten in jedem der drei Netzwerksegmente 2-1, 2-2, 2-3 zugegriffen werden. Auf diese Weise kann beispielsweise vom Hostrechner 16 aus eine Parametrierung oder Konfigurierung der Feldgeräte, Gatewaygeräte und sonstigen Feldbuskomponenten in den drei Netzwerksegmenten 2-1, 2-2, 2-3 durchgeführt werden. Darüber hinaus ist es möglich, vom Hostrechner 16 aus den Gerätezustand sowie ausgewählte Parameter der Feldgeräte, Gatewaygeräte und sonstigen Feldbuskomponenten in den drei Netzwerksegmenten 2-1, 2-2, 2-3 abzufragen und dem Benutzer darzustellen.

Im Folgenden soll diskutiert werden, wie vom Hostrechner 16 aus auf eine bestimmte Feldbuskomponente in einem der Netzwerksegmente 2-1, 2-2, 2-3 zugegriffen werden kann, beispielsweise um die Feldbuskomponente zu parametrieren. Der Hostrechner 16 sendet hierzu einen an die jeweilige Feldbuskomponente adressierten Datenverkehr über die Datenverbindung 23 zur Aggregatorbox 21. Dieser Datenverkehr ist beispielsweise an das Feldgerät 5 im ersten Netzwerksegment 2-1 adressiert. Auf Seiten der Aggregatorbox 21 ist eine Routingeinrichtung 24 vorgesehen, in der Routinginformationen 25 vorgehalten werden. Die Routinginformationen 25 geben an, an welches der Netzwerksegmente 2-1, 2-2, 2-3 ein an eine bestimmte Feldbuskomponente gerichteter Datenverkehr weitergeleitet werden muss. Anhand dieser Routinginformationen 25 kann die Routingeinrichtung 24 der Aggregatorbox 21 herausfinden, dass sich das Feldgerät 5 im ersten Netzwerksegment 2-1 befindet, so dass der vom Hostrechner 16 empfangene Datenverkehr zum ersten Netzwerksegment 2-1 geroutet werden muss. Insofern übermittelt die Routingeinrichtung 24 den Datenverkehr über die Datenverbindung 22-1 zum Feldzugangsgerät 3-1 und von dort weiter zum Feldgerät 5. Diese Datenübermittlung ist in Figur 2 durch den Pfeil 26 veranschaulicht. Dabei sind die Datenverbindungen 23 und 22-1 vorzugsweise als Ethernet-Verbindungen ausgelegt, so dass der Datenverkehr in Form von Ethernet-Paketen vom Hostrechner 16 über die Aggregatorbox 21 zum Feldzugangsgerät 3-1 übermittelt werden kann.

In umgekehrter Richtung kann vom Feldgerät 5 aus ein Datenverkehr über das Feldzugangsgerät 3-1 des ersten Netzwerksegments 2-1 und über die Datenverbindung 22-1 zur Aggregatorbox 21 übertragen werden. Die Aggregatorbox 21 empfängt diesen Datenverkehr und leitet ihn über die Datenverbindung 23 zum Hostrechner 16 weiter. Dieser Datenverkehr ist in Figur 2 durch den Pfeil 27 veranschaulicht. Vorzugsweise werden die Daten wieder in Form eines Ethernet-Datenverkehrs vom Feldgerät 5 über die Aggregatorbox 21 zum Hostrechner 16 übermittelt. Auf Seiten des Hostrechners 16 können die vom Feldgerät 5 empfangenen Parameterwerte dem Benutzer beispielsweise mittels der Gerätezugriffssoftware dargestellt werden.

Für den Fall, dass an die Aggregatorbox 21 mehrere Hostrechner angeschlossen sind, leitet die Aggregatorbox 21 den von einer Feldbuskomponente empfangenen Datenverkehr bevorzugt nur an denjenigen Hostrechner oder an diejenigen Hostrechner weiter, für die der Datenverkehr bestimmt ist. In der Regel handelt es sich bei dem von der Feldbuskomponente empfangenen Datenverkehr um eine Antwort auf eine Anfrage eines bestimmten Hostrechners. In diesem Fall würde die Aggregatorbox 21 den von der Feldbuskomponente empfangenen Datenverkehr nur an denjenigen Hostrechner weiterleiten, von dem die Anfrage ausgegangen ist. Die erforderlichen Informationen, um die Antwort der Anfrage zuordnen zu können, werden auf Seiten der Aggregatorbox 21 vorgehalten. Alternativ dazu könnte der vom Feldzugangsgerät empfangene Datenverkehr beispielsweise aber auch Events betreffen, die für einen oder mehrere der Hostrechner von Relevanz sind. In diesem Fall würde die Aggregatorbox 21 den empfangenen Datenverkehr an all diejenigen Hostrechner weiterleiten, für die das jeweilige Event von Relevanz ist.

Die Bereitstellung der Aggregatorbox 21 hat den Vorteil, dass die verschiedenen Hostrechner 16, 18, 19 lediglich an der Aggregatorbox 21 registriert werden müssen. Auf Seiten der Aggregatorbox 21 ist eine Firewall 28 vorgesehen, die dazu ausgelegt ist, unberechtigte Zugriffe auf das Automatisierungsnetzwerk zu verhindern. Diese Firewall 28 muss daher so konfiguriert werden, dass von jedem der Hostrechner 16, 18, 19 aus ein Zugriff auf die verschiedenen Netzwerksegmente 2-1, 2-2, 2-3 zugelassen wird. Die Zugriffsberechtigungen können aber auch auf bestimmte vorgebbare Netzwerksegmente 2-1, 2-2, 2-3 oder auf bestimmte vorgebbare Feldbuskomponenten oder bestimmte Funktionalitäten von Feldbuskomponenten eingeschränkt werden. Hierzu können auf Seiten der Aggregatorbox 21 beispielsweise Berechtigungsprofile für bestimmte Hostrechner 16, 18, 19 oder für bestimmte Benutzer gespeichert werden, welche für den jeweiligen Hostrechner oder Benutzer die Zugriffsberechtigungen auf bestimmte Netzwerksegmente und/oder auf bestimmte Feldbuskomponenten und/oder auf bestimmte Funktionalitäten der Feldbuskomponenten individuell festlegen.

Dabei ist es nicht mehr erforderlich, die Hostrechner 16, 18, 19 an jedem der Feldzugangsgeräte 3-1, 3-2, 3-3 zu registrieren. Nachdem der Zugriff auf das Automatisierungsnetzwerk zentral über die Aggregatorbox 21 erfolgt, ist es nicht erforderlich, eine Zugriffskontrolle auf Seiten der Feldzugangsgeräte 3-1, 3-2, 3-3 durchzuführen. Da der Zugriff zentral über die auf der Aggregatorbox 21 installierte Firewall 28 kontrolliert wird, ist es auch nicht zwingend erforderlich, auf Seiten der Feldzugangsgeräte 3-1, 3-2, 3-3 jeweils eine Firewall vorzusehen, so dass die in Figur 1 gezeigten Firewalls 17-1, 17-2, 17-3 entfallen können. Alternativ dazu könnte man die Firewalls auf Seiten der Feldzugangsgeräte 3-1, 3-2, 3-3 jedoch auch beibehalten.

Darüber hinaus können in der Interaktion zwischen den Feldzugangsgeräten 3-1, 3-2, 3-3 und der Aggregatorbox 21 weitere Zusatzfunktionalitäten vorgesehen sein. Beispielsweise könnte zumindest eines der Feldzugangsgeräte 3-1, 3-2, 3-3 dazu ausgelegt sein, der Aggregatorbox 21 gemäß einem vorgegebenen zeitlichen Schema, vorzugsweise in regelmäßigen zeitlichen Abständen anzuzeigen, dass das jeweilige Feldzugangsgerät funktioniert und ein Zugriff auf das jeweilige Netzwerksegment 2-1, 2-2, 2-3 möglich ist.

Gemäß einer weiteren Ausführungsform könnte vorgesehen sein, dass die Feldzugangsgeräte 3-1, 3-2, 3-3 Daten zu Gerätezustand und Gerätegesundheit ("asset health") der im jeweiligen Netzwerksegment 2-1, 2-2, 2-3 befindlichen Feldbuskomponenten erfassen und gemäß einem vorgegebenen zeitlichen Schema, vorzugsweise in regelmäßigen zeitlichen Abständen, zur Aggregatorbox 21 übertragen. Einem Benutzer, der über seinen Hostrechner 16 mit der Aggregatorbox 21 verbunden ist, können diese Informationen zum Gerätezustand dann in einer Überblicksdarstellung für sämtliche Netzwerksegmente 2-1, 2-2, 2-3 des gesamten Feldbussystems 20 angezeigt werden. Auf der Basis dieser Gesamtansicht des Feldbussystems 20 kann der Benutzer dann entscheiden, welche Parameter er von den einzelnen Feldgeräten, Gatewaygeräten und sonstigen Feldbuskomponenten abfragen und gegebenenfalls abändern möchte.

Bevor ein Datenaustausch zwischen der Aggregatorbox 21 und den Feldzugangsgeräten 3-1, 3-2, 3-3 über die Datenverbindungen 22-1, 22-2, 22-3 möglich ist, ist es notwendig, dass die Aggregatorbox 21 und die Feldzugangsgeräte 3-1, 3-2, 3-3 einander gegenseitig identifizieren und ihre Gerätekennungen austauschen, damit der jeweilige Datenverkehr zum jeweils anderen Kommunikationsteilnehmer geleitet werden kann. Im Folgenden werden verschiedene Möglichkeiten beschrieben, wie die Aggregatorbox 21 und die Feldzugangsgeräte 3-1, 3-2, 3-3 einander wechselseitig identifizieren und ihre Gerätekennungen austauschen können.

Gemäß einer ersten Möglichkeit sind die Gerätekennungen der Feldzugangsgeräte 3-1, 3-2, 3-3 in der Aggregatorbox 21 vorab gespeichert. Beispielsweise können die Gerätekennungen der angeschlossenen Feldzugangsgeräte 3-1, 3-2, 3-3 in der Aggregatorbox 21 manuell eingegeben werden. Die Aggregatorbox 21 kann sich dann ihrerseits gegenüber den Feldzugangsgeräten 3-1, 3-2, 3-3 identifizieren und den Feldzugangsgeräten 3-1, 3-2, 3-3 die eigene Gerätekennung übermitteln. Auf diese Weise können sich die Aggregatorbox 21 und die Feldzugangsgeräte 3-1, 3-2, 3-3 wechselseitig über ihre Gerätekennungen informieren. Im Fall von Ethernet-Verbindungen werden als Gerätekennungen beispielsweise die IP-Adressen der Feldzugangsgeräte 3-1, 3-2, 3-3 und der Aggregatorbox 21 verwendet.

Gemäß einer zweiten Möglichkeit kann vorgesehen sein, dass auf Seiten der Feldzugangsgeräte 3-1, 3-2, 3-3jeweils die Gerätekennung der Aggregatorbox 21 gespeichert ist. Beispielsweise kann in jedem der Feldzugangsgeräte 3-1, 3-2, 3-3 spezifiziert werden, dass der Datenaustausch mit einem Hostrechner über eine Aggregatorbox 21 geroutet werden soll, deren Gerätekennung in den Feldzugangsgeräten 3-1, 3-2, 3-3 gespeichert ist. Die Gerätekennung der Aggregatorbox 21 kann in den Feldzugangsgeräten beispielsweise vorab manuell eingegeben werden. Die Feldzugangsgeräte 3-1, 3-2, 3-3 können sich dann gegenüber der Aggregatorbox 21 identifizieren und der Aggregatorbox 21 die jeweilige eigene Gerätekennung übermitteln. Auf diese Weise können sich die Aggregatorbox 21 und die Feldzugangsgeräte 3-1, 3-2, 3-3 wechselseitig über ihre Gerätekennungen informieren. Im Fall von Ethernet-Verbindungen werden als Gerätekennungen beispielsweise die IP-Adressen der Feldzugangsgeräte 3-1, 3-2, 3-3 und der Aggregatorbox 21 verwendet.

Gemäß einer weiteren Möglichkeit kann vorgesehen sein, dass die Feldzugangsgeräte 3-1, 3-2, 3-3 gemäß einem vorgegebenen zeitlichen Schema, vorzugsweise in regelmäßigen Abständen Broadcast-Mitteilungen aussenden, wobei in den Broadcast-Mitteilungen die Gerätekennung des jeweiligen Feldzugangsgerätes angegeben ist. Die Aggregatorbox 21 empfängt die Broadcast-Mitteilungen der Feldzugangsgeräte 3-1, 3-2, 3-3 und entnimmt den Broadcast-Mitteilungen die jeweiligen Gerätekennungen der mit der Aggregatorbox 21 verbundenen Feldzugangsgeräte 3-1, 3-2, 3-3. Die Aggregatorbox 21 kann sich ihrerseits im nächsten Schritt gegenüber den Feldzugangsgeräten 3-1, 3-2, 3-3 identifizieren und den Feldzugangsgeräten 3-1, 3-2, 3-3 die eigene Gerätekennung mitteilen. Ausgehend von den Broadcast-Mitteilungen der Feldzugangsgeräte 3-1, 3-2, 3-3 informieren sich die Aggregatorbox 21 und die Feldzugangsgeräte 3-1, 3-2, 3-3 wechselseitig über ihre Gerätekennungen. Im Fall von Ethernet-Verbindungen werden als Gerätekennungen beispielsweise die IP-Adressen der Feldzugangsgeräte 3-1, 3-2, 3-3 und der Aggregatorbox 21 verwendet.

Gemäß einer weiteren Möglichkeit kann die Aggregatorbox 21 dazu ausgebildet sein, gemäß einem vorgegebenen zeitlichen Schema und vorzugsweise in regelmäßigen Abständen Broadcast-Mitteilungen auszusenden, wobei in den Broadcast-Mitteilungen eine Gerätekennung der Aggregatorbox 21 angegeben sein kann. Diese Broadcast-Mitteilungen würden dann von den Feldzugangsgeräten 3-1, 3-2, 3-3 empfangen, so dass die Feldzugangsgeräte 3-1, 3-2, 3-3 über die Gerätekennung der Aggregatorbox 21 informiert werden. Daraufhin könnten sich die Feldzugangsgeräte 3-1, 3-2, 3-3 unter Angabe ihrer eigenen Gerätekennung gegenüber der Aggregatorbox 21 identifizieren. Ausgehend von den Broadcast-Mitteilungen der Aggregatorbox 21 informieren sich die Aggregatorbox 21 und die Feldzugangsgeräte 3-1, 3-2, 3-3 wechselseitig über ihre Gerätekennungen. Im Fall von Ethernet-Verbindungen werden als Gerätekennungen beispielsweise die IP-Adressen der Feldzugangsgeräte 3-1, 3-2, 3-3 und der Aggregatorbox 21 verwendet.

Gemäß einer bevorzugten Ausführungsform der Erfindung kann auf Seiten von mindestens einem der Feldzugangsgeräte 3-1, 3-2, 3-3 ein Einstellelement vorgesehen sein, das wahlweise in eine erste Einstellung oder in eine zweite Einstellung gebracht werden kann. Wenn sich das Einstellelement in der ersten Einstellung befindet, die im Weiteren mit "true" bezeichnet wird, dann zeigt das an, dass im Automatisierungsnetzwerk eine Aggregatorbox 21 vorgesehen ist und der Datenaustausch mit dem mindestens einen Hostrechner über die Aggregatorbox 21 geroutet wird. Wenn sich das Einstellelement dagegen in der zweiten Einstellung befindet, die im Folgenden mit "false" bezeichnet wird, dann bedeutet dies, dass innerhalb des Automatisierungsnetzwerks keine Aggregatorbox vorgesehen ist, sodass der Datenaustausch unmittelbar zwischen dem mindestens einen Hostrechner und dem jeweiligen Feldzugangsgerät erfolgt.

Bei dem Einstellelement kann es sich beispielweise um ein in Hardware realisiertes Einstellelement handeln. Beispielsweise kann es sich bei dem Einstellelement um eines von folgenden handeln: ein Schaltelement, einen Umschalter, ein Umschaltelement, einen Dual-In-Line-Schalter, ein Konfigurationselement, ein Steckelement, einen Stecker, einen Jumper, eine Steckbrücke, einen Kurzschlussstecker.

Wenn sich das Einstellelement in der ersten Einstellung "true" befindet, dann sind die Feldzugangsgeräte 3-1, 3-2, 3-3 über Datenverbindungen 22-1, 22-2, 22-3 mit der Aggregatorbox 21 verbunden. Für den Datenaustauch ist es dann erforderlich, dass die Feldzugangsgeräte 3-1, 3-2, 3-3 und die Aggregatorbox 21 wechselseitig ihre Gerätekennungen austauschen, also beispielsweise ihre IP-Adressen. Eine Möglichkeit hierfür ist, dass auf jedem der Feldzugangsgeräte 3-1, 3-2, 3-3 vorab die Gerätekennung der Aggregatorbox 21 abgespeichert wird, so dass sich jedes Feldzugangsgerät 3-1, 3-2, 3-3 gegenüber der Aggregatorbox 21 identifizieren kann.

Alternativ dazu kann vorgesehen sein, dass auf Seiten von jedem der Feldzugangsgeräte 3-1, 3-2, 3-3 gemäß einem vorab festgelegten Bildungsschema ein Name der Aggregatorbox 21 erzeugt wird, an den der Datenverkehr dann adressiert wird. Dieser Name kann beispielsweise ausgehend von der lokalen Domain gebildet werden, in der sich die drei Feldzugangsgeräte 3-1, 3-2, 3-3 des Automatisierungsnetzwerks befinden. Wenn sich ein Feldzugangsgerät 3-1, 3-2, 3-3 in dem jeweiligen lokalen Netzwerk anmeldet, dann wird dem Feldzugangsgerät von dem DHCP-Server des Netzwerks eine IP-Adresse zugewiesen, wobei dem Feldzugangsgerät im Rahmen dieser DHCP-Zuweisung auch die lokale Domain mitgeteilt wird, in der es angemeldet ist. Innerhalb einer Firma könnte es sich bei der lokalen Domain beispielsweise um die jeweilige Firmendomain handeln, beispielsweise um eine Domain wie "beispielfirma.de". handeln. Ausgehend von dieser lokalen Domain kann dann durch Hinzufügen eines weiteren Namenbestandteils ein Name der Aggregatorbox 21 gebildet werden, an den der Datenverkehr dann adressiert wird. Der Name der Aggregatorbox wird also ausgehend von der lokalen Domain mittels einer vorgegebenen Bildungsvorschrift erzeugt. Beispielsweise könnte der Namensbestandteil "aggregator" sowie ein Trennpunkt mit der lokalen Domain "beispielfirma.de" zu dem Namen "aggregator.beispielfirma.de" verbunden werden. Dieser Name "aggregator.beispielfirma.de" wird dann vom jeweiligen Feldzugangsgerät 3-1, 3-2, 3-3 dazu verwendet, den Datenverkehr an die Aggregatorbox 21 zu adressieren. Der Name "aggregator.beispielfirma.de" kann mittels eines DNS-Servers zur Laufzeit in die IP-Adresse der Aggregatorbox 21 umgewandelt werden. Der Vorteil dieser Vorgehensweise ist, dass ein zum Adressieren der Aggregatorbox 21 geeigneter Name auf allen Feldzugangsgeräten 3-1, 3-2, 3-3 in übereinstimmender Weise ausgehend von der lokalen Domain mittels der vorgegebenen Bildungsvorschrift erzeugt werden kann. Es ist bei dieser Ausführungsform nicht erforderlich, die Gerätekennung oder die IP-Adresse der Aggregatorbox 21 vorab auf dem Feldzugangsgerät 3-1, 3-2, 3-3 zu speichern.

Damit die Aggregatorbox 21 den vom Hostrechner 16 empfangenen Datenverkehr zu derjenigen Feldbuskomponente routen kann, für die der Datenverkehr bestimmt ist, muss auf Seiten der Routingeinrichtung 24 bekannt sein, welche Feldgeräte, Gatewaygeräte und sonstigen Feldbuskomponenten in den einzelnen Netzwerksegmenten 2-1, 2-2, 2-3 vorhanden sind. In der Routingeinrichtung 24 sind deshalb Routinginformationen 25 gespeichert, die zumindest für einen Teil der Feldbuskomponenten das zugehörige Netzwerksegment angeben, in dem sich die Feldbuskomponente befindet. Vorzugsweise geben die Routinginformationen 25 zu jeder Feldbuskomponente das zugehörige Netzwerksegment an, in dem sich die Feldbuskomponente befindet. Zusätzlich können optional Informationen zur Topologie innerhalb der Netzwerksegmente vorgehalten werden.

Die von der Aggregatorbox 21 benötigten Informationen werden von den Feldzugangsgeräten 3-1, 3-2, 3-3 der Netzwerksegmente 2-1, 2-2, 2-3 beispielsweise ermittelt, indem das jeweilige Feldzugangsgerät einen Topologiescan des jeweiligen Netzwerksegments durchführt. Ein derartiger Topologiescan könnte beispielsweise von dem jeweiligen Feldzugangsgerät 3-1, 3-2, 3-3 selbsttätig zu vorgegebenen Zeiten oder in vorgegebenen zeitlichen Abständen durchgeführt werden. Alternativ dazu wäre es möglich, dass derartige Topologiescans von der Aggregatorbox 21 aus veranlasst werden. Bei der Durchführung eines Topologiescans ermittelt das jeweilige Feldzugangsgerät den hierarchischen Aufbau von Feldbussegmenten, Feldgeräten, Gatewaygeräten und sonstigen Feldbuskomponenten innerhalb des Feldbusnetzwerks 2-1. Das Feldzugangsgerät 3-1 würde beispielsweise feststellen, dass an den Feldbus 4 die Feldgeräte 5 und 6 sowie das Gatewaygerät 7 angeschlossen sind, wobei am Gatewaygerät 7 die beiden Feldgeräte 8 und 9 angeschlossen sind. Diese vom Feldzugangsgerät 3-1 ermittelten Topologieinformationen zum Netzwerksegment 2-1 werden anschließend beispielsweise in Form einer Datei 29-1 vom Feldzugangsgerät 3-1 zur Aggregatorbox 21 übermittelt. Auch von den Feldzugangsgeräten 3-2 und 3-3 wird jeweils ein Topologiescan des zugehörigen Netzwerksegments 2-2 oder 2-3 durchgeführt und die so ermittelten Topologieinformationen werden in Form von Dateien 29-2, 29-3 vom jeweiligen Feldzugangsgerät 3-2, 3-3 zur Aggregatorbox 21 übermittelt. Die in den Dateien 29-1, 29-2, 29-3 enthaltenen Topologieinformationen dienen als Basis für die Aufbereitung und Bereitstellung der Routinginformationen 25. Diese Routinginformationen dienen der Routingeinrichtung 24 als Basis, um den von der Aggregatorbox 21 empfangenen Datenverkehr zum richtigen Netzwerksegment zu routen. Die Routinginformationen 25 können also Topologieinformationen zu den Netzwerksegmenten 2-1, 2-2, 2-3 enthalten, die im Rahmen von Topologiescans ermittelt werden.

Allerdings ist es für das Routing des Datenverkehrs nicht zwingend erforderlich, dass die Routinginformationen 25 die vollständigen Topologieinformationen zu den Netzwerksegmenten 2-1, 2-2, 2-3 enthalten. Insofern kann gemäß einer alternativ bevorzugten Lösung vorgesehen sein, dass es sich bei den Routinginformationen 25 um Zuordnungsinformationen handelt, welche die Feldbuskomponenten den verschiedenen Netzwerksegmenten zuordnen. Diese Zuordnungsinformationen geben zumindest für einen Teil der Feldbuskomponenten an, welchem Netzwerksegment die jeweilige Feldbuskomponente zugeordnet ist. Beispielsweise können die Routinginformationen 25 zu jeder Gerätekennung einer Feldbuskomponente, an die der Datenverkehr gerichtet werden kann, das zugehörige Netzwerksegment angeben. Auf dieser Basis kann die Routingeinrichtung 24 entscheiden, an welches Netzwerksegment ein an eine bestimmte Feldbuskomponente adressierter Datenverkehr geroutet werden muss. Die Zuordnungsinformationen könnten beispielsweise auch so strukturiert sein, dass sie zu jedem Netzwerksegment angeben, welche Feldbuskomponenten sich in dem Netzwerksegment befinden. Derartige Zuordnungsinformationen sind ausreichend, um den Datenverkehr zum richtigen Netzwerksegment routen zu können.

Durch die Verwendung der Aggregatorbox 21 ergibt sich somit der Vorteil, dass der vom Hostrechner 16 empfangene Datenverkehr automatisch zum richtigen Netzwerksegment und zur richtigen Zieladresse geroutet wird. Ein Benutzer, der über seinen Hostrechner, beispielsweise einen Laptop, auf ein bestimmtes Feldgerät zugreifen möchte, muss sich also nicht mit der Frage auseinandersetzen, in welchem Netzwerksegment das jeweilige Feldgerät angeordnet ist.

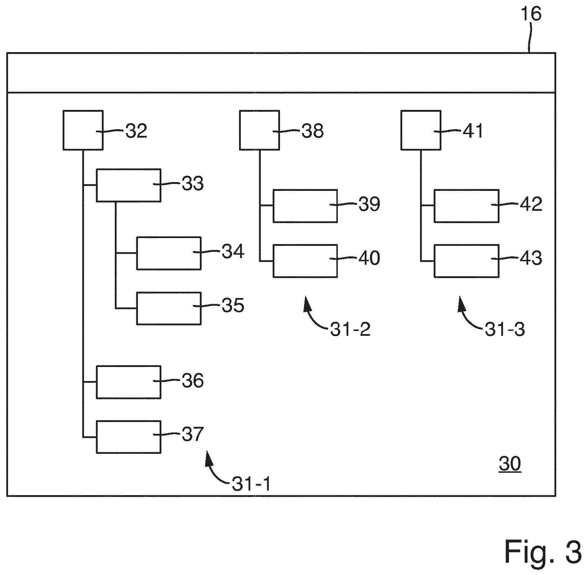

In Figur 3 ist der Hostrechner 16 mit der darauf installierten Gerätezugriffssoftware 30 schematisch dargestellt. Die von der Gerätezugriffssoftware 30 benötigten Informationen über die Eigenschaften und Parameter der Feldgeräte, Gateways, Remote I/Os etc. werden von den Herstellern der unterschiedlichen Geräte in der Regel in Form von Gerätebeschreibungsdateien oder Gerätetreibern zur Verfügung gestellt. Beispielsweise werden bei den Feldbusprotokollen Profibus-DP, Profibus-PA, Fieldbus Foundation und HART Gerätebeschreibungen gemäß den Standards DTM (Device Type Manager), DD (Device Description), EDD (Enhanced Device Description) sowie FDI Device Packages verwendet.

Im Standard FDT/DTM werden die DTMs (Device Type Manager) in Form von dynamisch ladbaren Bibliotheken (DLLs) oder in Form von ausführbaren Dateien (Executables) zur Verfügung gestellt. Die verschiedenen DTMs zu den verschiedenen Komponenten des Feldbusnetzwerks werden in eine gemeinsame FDT-Rahmenapplikation eingebunden, wobei FDT für "Field Device Tool" steht. Dadurch wird eine gemeinsame Rahmenapplikation zur Verfügung gestellt, in die die DTMs zu verschiedenen Geräten und von unterschiedlichen Herstellern eingebunden werden können. Als Nachfolgestandard von FDT wurde der Standard FDT2 eingeführt. Darüber hinaus hat sich als Nachfolgestandard von FDT und EDD der Standard FDI Device Packages etabliert, wobei FDI für "Field Device Integration" steht. Neben den bisher diskutierten Feldbusprotokollen Profibus, Fieldbus Foundation und HART sind die sogenannten Industrial Ethernet-Protokolle von Relevanz, zu denen u.a. die Feldbusprotokolle EtherNet/IP, PROFINET und EtherCAT gehören. Beim Feldbusprotokoll EtherNet/IP ist eine Gerätebeschreibungsdatei entsprechend dem Standard EDS (Electronic Data Sheet) zur Beschreibung sowohl des zyklischen als auch des azyklischen Datenaustauschs vorgesehen. Daneben gewinnt der Standard OPC Unified Architecture der OPC Foundation, kurz OPC UA, zunehmend an Bedeutung.

Wie anhand von Figur 3 zu erkennen ist, ist in der Gerätezugriffssoftware 30 zu jedem der drei Netzwerksegmente 2-1, 2-2, 2-3 eine zugehörige hierarchische Treiberstruktur 31-1, 31-2, 31-3 vorhanden, die die Struktur des jeweiligen Netzwerksegments widerspiegelt. Die erste Treiberstruktur 31-1 zum ersten Netzwerksegment 2-1 umfasst einen Kommunikationstreiber 32, einen Gatewaytreiber 33 sowie Gerätetreiber 34 bis 37. Die zweite Treiberstruktur 31-2 umfasst einen Kommunikationstreiber 38 sowie zwei Gerätetreiber 39 und 40. Die dritte Treiberstruktur 31-3 umfasst den Kommunikationstreiber 41 sowie die Gerätetreiber 42 und 43. Wenn der Benutzer beispielsweise auf das Feldgerät 11 im zweiten Netzwerksegment 2-2 zugreifen möchte, dann wird über den Gerätetreiber 39 und den Kommunikationstreiber 38 ein Datenverkehr erzeugt, der über die Aggregatorbox 21 zum Feldzugangsgerät 3-2 des zweiten Netzwerksegments 2-2 geroutet und anschließend zum Feldgerät 11 weitergeleitet wird. In umgekehrter Richtung gelangt ein Datenverkehr vom Feldgerät 11 über das Netzwerksegment 2-2 und die Aggregatorbox 21 zum Kommunikationstreiber 38 und von dort zum Gerätetreiber 39.

## Patentansprüche

1. Eine Aggregatorvorrichtung (21), welche dazu ausgelegt ist, eine Mehrzahl von ersten Datenverbindungen (22-1, 22-2, 22-3) zu einer Mehrzahl von Feldzugangsgeräten (3-1, 3-2, 3-3) auszubilden, wobei die Feldzugangsgeräte (3-1, 3-2, 3-3) an eine Mehrzahl von unterschiedlichen Netzwerksegmenten (2-1, 2-2, 2-3) eines Feldbussystems (20) angeschlossen sind,
wobei die Aggregatorvorrichtung (21) dazu ausgelegt ist, mindestens eine zweite Datenverbindung (23) zu mindestens einem Hostrechner (16, 18, 19) auszubilden,
wobei die Aggregatorvorrichtung (21) dazu ausgelegt ist, über mindestens eine der zweiten Datenverbindungen (23) von dem mindestens einen Hostrechner (16, 18, 19) einen ersten Datenverkehr (26) zu empfangen und den ersten Datenverkehr (26) über mindestens eine der ersten Datenverbindungen (22-1, 22-2, 22-3) zu einem Feldzugangsgerät (3-1) desjenigen Netzwerksegments (2-1) weiterzuleiten, in dem sich die jeweilige Feldbuskomponente (5), an die der erste Datenverkehr (26) gerichtet ist, befindet, wobei es sich bei dem ersten Datenverkehr (26) um einen Datenverkehr zur Parametrierung, Konfiguration und Zustandsüberwachung einer Feldbuskomponente (5) handelt, und
von einer Feldbuskomponente (5) in einem der Netzwerksegmente (2-1, 2-2, 2-3) über mindestens eine der ersten Datenverbindungen (22-1, 22-2, 22-3) einen zweiten Datenverkehr (27) zu empfangen und den zweiten Datenverkehr (27) über mindestens eine der zweiten Datenverbindungen (23) an mindestens einen der Hostrechner (16, 18, 19) weiterzuleiten, wobei der von einer Feldbuskomponente (5) in einem der Netzwerksegmente (2-1, 2-2, 2-3) empfangene zweite Datenverkehr (27) mindestens einen Parameterwert der jeweiligen Feldbuskomponente (5) umfasst,
wobei die Aggregatorvorrichtung eine Firewall umfasst, wobei der mindestens eine Hostrechner bei der Firewall der Aggregatorvorrichtung registrierbar ist, so dass von dem mindestens einen Hostrechner ein Zugriff auf die verschiedenen Netzwerksegmente (2-1, 2-2, 2-3) zugelassen wird.

2. Aggregatorvorrichtung gemäß Anspruch 1, **gekennzeichnet durch** mindestens eines von folgenden:
- die Aggregatorvorrichtung ist dazu ausgelegt, einen vereinheitlichten Zugang zu einem mehrere Netzwerksegmente umfassenden Feldbussystem bereitzustellen;
- die Aggregatorvorrichtung ist dazu ausgelegt, den von einer Feldbuskomponente in einem der Netzwerksegmente empfangenen zweiten Datenverkehr selektiv zu dem Hostrechner oder zu den Hostrechnern weiterzuleiten, für den beziehungsweise für die der zweite Datenverkehr bestimmt ist;
- die Aggregatorvorrichtung ist als eigenständiges Aggregatorgerät oder in Form eines auf einem Rechner lauffähigen Softwaremoduls realisiert.

3. Aggregatorvorrichtung gemäß Anspruch 1 oder Anspruch 2, **gekennzeichnet durch** mindestens eines von folgenden:
- die Mehrzahl von ersten Datenverbindungen umfasst mindestens eines von folgenden: mindestens eine drahtlose Datenverbindung, mindestens eine drahtgebundene Datenverbindung;
- die mindestens eine zweite Datenverbindung umfasst mindestens eines von folgenden: mindestens eine drahtlose Datenverbindung, mindestens eine drahtgebundene Datenverbindung.

4. Aggregatorvorrichtung gemäß einem der Ansprüche 1 bis 3, **dadurch gekennzeichnet, dass** die Aggregatorvorrichtung dazu ausgelegt ist, den ersten Datenverkehr anhand der als Zieladresse des ersten Datenverkehrs angegebenen Feldbuskomponente zu einem Feldzugangsgerät desjenigen Netzwerksegments weiterzuleiten, in dem sich die jeweilige Feldbuskomponente befindet.

5. Aggregatorvorrichtung gemäß einem der Ansprüche 1 bis 4, **dadurch gekennzeichnet, dass** auf Seiten der Aggregatorvorrichtung Routinginformationen gespeichert sind, welche angeben, zu welchem Netzwerksegment ein an eine bestimmte Feldbuskomponente gerichteter erster Datenverkehr zu routen ist.

6. Aggregatorvorrichtung gemäß Anspruch 5, **gekennzeichnet durch** mindestens eines von folgenden:
- die Aggregatorvorrichtung ist dazu ausgelegt, einen von mindestens einem der Hostrechner empfangenen ersten Datenverkehr anhand der Routinginformationen zu demjenigen Netzwerksegment weiterzuleiten, in dem sich die Feldbuskomponente befindet, an die der erste Datenverkehr gerichtet ist;
- bei den Routinginformationen handelt es sich um Topologieinformationen, welche die Topologie der mit der Aggregatorvorrichtung verbundenen Netzwerksegmente spezifizieren;
- mindestens eines der Feldzugangsgeräte ist dazu ausgelegt, mittels eines Scans Topologieinformationen zum zugehörigen Netzwerksegment zu ermitteln und die Topologieinformationen zur Aggregatorvorrichtung zu übertragen;
- mindestens eines der Feldzugangsgeräte dazu ausgelegt, mittels eines Scans die in dem zugehörigen Netzwerksegment vorhandenen Feldbuskomponenten zu ermitteln;
- mindestens eines der Feldzugangsgeräte ist dazu ausgelegt, mittels eines Scans die in dem zugehörigen Netzwerksegment vorhandenen Feldbuskomponenten zu ermitteln und die Scanergebnisse in Form von mindestens einer Datei vom jeweiligen Feldzugangsgerät zur Aggregatorvorrichtung zu übermitteln;
- das mindestens eine Feldzugangsgerät ist dazu ausgelegt, selbsttätig in vorgegebenen zeitlichen Abständen einen Scan des zugehörigen Netzwerksegments durchzuführen;
- die Aggregatorvorrichtung ist dazu ausgelegt, auf Seiten des mindestens einen Feldzugangsgeräts einen Scan zu veranlassen.

7. Aggregatorvorrichtung gemäß Anspruch 5, **gekennzeichnet durch** mindestens eines von folgenden:
- bei den Routinginformationen handelt es sich um Zuordnungsinformationen, welche die Feldbuskomponenten den verschiedenen Netzwerksegmenten zuordnen;
- bei den Routinginformationen handelt es sich um Zuordnungsinformationen, die zumindest für einen Teil der Feldbuskomponenten angeben, in welchem Netzwerksegment sich die jeweilige Feldbuskomponente befindet.

8. Aggregatorvorrichtung gemäß einem der Ansprüche 1 bis 7, **gekennzeichnet durch** mindestens eines von folgenden:
- die Aggregatorvorrichtung ist dazu ausgelegt, den mindestens einen Hostrechner zu authentifizieren;
- die Aggregatorvorrichtung ist dazu ausgelegt, den mindestens einen Hostrechner zu autorisieren;
- die Aggregatorvorrichtung ist dazu ausgelegt, dem mindestens einen Hostrechner Zugriffsberechtigungen für den vollständigen oder teilweisen Zugriff auf bestimmte Netzwerksegmente und/oder bestimmte Feldbuskomponenten und/oder bestimmte Funktionalitäten von Feldbuskomponenten zuzuweisen;
- die Aggregatorvorrichtung weist eine Ver- und Entschlüsselungseinheit zum Ver- und Entschlüsseln des mit dem mindestens einen Hostrechner ausgetauschten Datenverkehrs auf.

9. Ein Feldbussystem (20), welches aufweist:
eine Mehrzahl von Netzwerksegmenten (2-1, 2-2, 2-3), wobei jedes Netzwerksegment (2-1, 2-2, 2-3) mindestens ein Feldzugangsgerät (3-1, 3-2, 3-3), mindestens einen Feldbus (4, 10, 13) und mindestens eine Feldbuskomponente (5 bis 9, 11, 12, 14, 15) umfasst, wobei das mindestens eine Feldzugangsgerät (3-1, 3-2, 3-3) dazu ausgelegt ist, einen Zugriff auf Feldbuskomponenten (5 bis 9, 11, 12, 14, 15) in dem jeweiligen Netzwerksegment (2-1, 2-2, 2-3) zu ermöglichen,
eine Aggregatorvorrichtung (21) gemäß einem der Ansprüche 1 bis 8, welche dazu ausgelegt ist, eine Mehrzahl von ersten Datenverbindungen (22-1, 22-2, 22-3) zu zumindest einigen der Feldzugangsgeräte (3-1, 3-2, 3-3) in unterschiedlichen Netzwerksegmenten (2-1, 2-2, 2-3) auszubilden.

10. Feldbussystem gemäß Anspruch 9, **dadurch gekennzeichnet, dass** das Feldbussystem dazu ausgelegt ist, dass die Aggregatorvorrichtung und die damit verbundenen Feldzugangsgeräte einander wechselseitig über ihre jeweiligen Gerätekennungen informieren, und/oder
dass zur Identifizierung der mit der Aggregatorvorrichtung verbundenen Feldzugangsgeräte Gerätekennungen der mit der Aggregatorvorrichtung verbundenen Feldzugangsgeräte in der Aggregatorvorrichtung abgespeichert sind, wobei die Aggregatorvorrichtung dazu ausgelegt ist, sich gegenüber den mit der Aggregatorvorrichtung verbundenen Feldzugangsgeräten zu identifizieren, und/oder
dass das Feldbussystem zusätzlich mindestens einen Hostrechner umfasst, der über mindestens eine Datenverbindung mit der Aggregatorvorrichtung verbunden ist.

11. Feldbussystem gemäß einem der Ansprüche 9 oder 10, **gekennzeichnet durch** mindestens eines von folgenden:
- bei der Mehrzahl von ersten Datenverbindungen handelt es sich um Ethernet-Verbindungen;
- bei der mindestens einen zweiten Datenverbindung handelt es sich um mindestens eine Ethernet-Verbindung;
- bei Gerätekennungen der Feldzugangsgeräte handelt es sich um IP-Adressen der Feldzugangsgeräte;
- bei einer Gerätekennung der Aggregatorvorrichtung handelt es sich um eine IP-Adresse der Aggregatorvorrichtung.

12. Feldbussystem gemäß einem der Ansprüche 9 bis 11, **gekennzeichnet durch** mindestens eines von folgenden:
- mindestens eines der mit der Aggregatorvorrichtung verbundenen Feldzugangsgeräte ist dazu ausgelegt, gemäß einem vorgegebenen zeitlichen Schema Broadcastmitteilungen auszusenden, wobei die Aggregatorvorrichtung dazu ausgelegt ist, die Broadcastmitteilungen von den mit der Aggregatorvorrichtung verbundenen Feldzugangsgeräten zu empfangen und die mit der Aggregatorvorrichtung verbundenen Feldzugangsgeräte anhand der empfangenen Broadcastmitteilungen zu identifizieren;
- mindestens eines der mit der Aggregatorvorrichtung verbundenen Feldzugangsgeräte ist dazu ausgelegt, gemäß einem vorgegebenen zeitlichen Schema Broadcastmitteilungen auszusenden, wobei die Aggregatorvorrichtung dazu ausgelegt ist, die Broadcastmitteilungen von den mit der Aggregatorvorrichtung verbundenen Feldzugangsgeräten zu empfangen und die mit der Aggregatorvorrichtung verbundenen Feldzugangsgeräte anhand der empfangenen Broadcastmitteilungen zu identifizieren, wobei das mindestens eine Feldzugangsgerät dazu ausgelegt ist, in der Broadcastmitteilung eine Gerätekennung des Feldzugangsgeräts an die Aggregatorvorrichtung zu übermitteln;
- mindestens eines der mit der Aggregatorvorrichtung verbundenen Feldzugangsgeräte ist dazu ausgelegt, gemäß einem vorgegebenen zeitlichen Schema Broadcastmitteilungen auszusenden, wobei die Aggregatorvorrichtung dazu ausgelegt ist, die Broadcastmitteilungen von den mit der Aggregatorvorrichtung verbundenen Feldzugangsgeräten zu empfangen und die mit der Aggregatorvorrichtung verbundenen Feldzugangsgeräte anhand der empfangenen Broadcastmitteilungen zu identifizieren, wobei die Aggregatorvorrichtung dazu ausgelegt ist, sich auf den Empfang der Broadcastmitteilungen hin gegenüber den Feldzugangsgeräten zu identifizieren.

13. Feldbussystem gemäß einem der Ansprüche 9 bis 12, **gekennzeichnet durch** mindestens eines von folgenden:
- die Aggregatorvorrichtung ist dazu ausgelegt, gemäß einem vorgegebenen zeitlichen Schema Broadcastmitteilungen auszusenden, wobei die Feldzugangsgeräte dazu ausgelegt sind, die Broadcastmitteilungen von der Aggregatorvorrichtung zu empfangen und die Aggregatorvorrichtung anhand der empfangenen Broadcastmitteilung zu identifizieren;
- die Aggregatorvorrichtung ist dazu ausgelegt, gemäß einem vorgegebenen zeitlichen Schema Broadcastmitteilungen auszusenden, wobei die Feldzugangsgeräte dazu ausgelegt sind, die Broadcastmitteilungen von der Aggregatorvorrichtung zu empfangen und die Aggregatorvorrichtung anhand der empfangenen Broadcastmitteilung zu identifizieren, wobei die Aggregatorvorrichtung dazu ausgelegt ist, in der Broadcastmitteilung eine Gerätekennung der Aggregatorvorrichtung an die mit der Aggregatorvorrichtung verbundenen Feldzugangsgeräte zu übermitteln;
- die Aggregatorvorrichtung ist dazu ausgelegt, gemäß einem vorgegebenen zeitlichen Schema Broadcastmitteilungen auszusenden, wobei die Feldzugangsgeräte dazu ausgelegt sind, die Broadcastmitteilungen von der Aggregatorvorrichtung zu empfangen und die Aggregatorvorrichtung anhand der empfangenen Broadcastmitteilung zu identifizieren, wobei die Feldzugangsgeräte dazu ausgelegt sind, sich auf den Empfang einer Broadcastmitteilung hin gegenüber der Aggregatorvorrichtung zu identifizieren.

14. Feldbussystem gemäß einem der Ansprüche 9 bis 13, **gekennzeichnet durch** mindestens eines von folgenden:
- auf Seiten der Feldzugangsgeräte ist im jeweiligen Feldzugangsgerät eine Gerätekennung der Aggregatorvorrichtung abgespeichert, wobei die Feldzugangsgeräte dazu ausgelegt sind, sich gegenüber der Aggregatorvorrichtung, mit der sie verbunden sind, zu identifizieren;
- mindestens eines der Feldzugangsgeräte weist ein Einstellelement auf, mit dem einstellbar ist, ob im Feldbussystem eine Aggregatorvorrichtung vorhanden ist, mit der das Feldzugangsgerät verbunden ist, oder ob keine derartige Aggregatorvorrichtung vorhanden ist und der Datenaustausch direkt mit mindestens einem Hostrechner erfolgt;
- mindestens eines der Feldzugangsgeräte weist ein Einstellelement auf, mit dem einstellbar ist, ob im Feldbussystem eine Aggregatorvorrichtung vorhanden ist, mit der das Feldzugangsgerät verbunden ist, oder ob keine derartige Aggregatorvorrichtung vorhanden ist und der Datenaustausch direkt mit mindestens einem Hostrechner erfolgt, wobei es sich bei dem Einstellelement um ein in Hardware realisiertes Einstellelement handelt;
- auf Seiten der Feldzugangsgeräte ist ausgehend von der lokalen Domain des Feldbussystems mittels einer vorgegebenen Bildungsvorschrift ein Name der Aggregatorvorrichtung erzeugbar, der zum Adressieren der Aggregatorvorrichtung verwendbar ist;
- auf Seiten der Feldzugangsgeräte ist ausgehend von der lokalen Domain des Feldbussystems mittels einer vorgegebenen Bildungsvorschrift ein Name der Aggregatorvorrichtung erzeugbar, der zum Adressieren der Aggregatorvorrichtung verwendbar ist, wobei das jeweilige Feldzugangsgerät dazu ausgelegt ist, zur Erzeugung des Namens der Aggregatorvorrichtung einen vorgegebenen Namensbestandteil mit der lokalen Domain des Feldbusnetzwerks zu dem Namen der Aggregatorvorrichtung zusammenzusetzen.

15. Feldbussystem gemäß einem der Ansprüche 9 bis 14, **gekennzeichnet durch** mindestens eines von folgenden:
- auf Seiten des mindestens einen Hostrechners ist eine Gerätezugriffssoftware installiert;
- bei der Gerätezugriffssoftware handelt es sich um eine Gerätezugriffssoftware gemäß einem der folgenden Standards: FDT, FDT2, FDI Device Packages, OPC Unified Architecture.

## Claims

1. An aggregator device (21), which is designed to establish a plurality of first data connections (22-1, 22-2, 22-3) to a plurality of field access devices (3-1, 3-2, 3-3), the field access devices (3-1, 3-2, 3-3) being connected to a plurality of different network segments (2-1, 2-2, 2-3) of a fieldbus system (20),
wherein the aggregator device (21) is designed to establish at least one second data connection (23) to at least one host computer (16, 18, 19),
wherein the aggregator device (21) is designed to receive, via at least one of the second data connections (23), a first data traffic (26) from the at least one host computer (16, 18, 19) and to forward the first data traffic (26) via at least one of the first data connections (22-1, 22-2, 22-3) to a field access device (3-1) of the network segment (2-1) in which the respective fieldbus component (5) to which the first data traffic (26) is addressed is located,
wherein the first data traffic (26) is data traffic for parameterization, configuration, and status monitoring of a fieldbus component (5),
and wherein the aggregator device (21) is designed to receive, from a fieldbus component (5) in one of the network segments (2-1, 2-2, 2-3), via at least one of the first data connections (22-1, 22-2, 22-3), a second data traffic (27) and to forward the second data traffic (27) via at least one of the second data connections (23) to at least one of the host computers (16, 18, 19),
wherein the second data traffic (27) received from a fieldbus component (5) in one of the network segments (2-1, 2-2, 2-3) comprises at least one parameter value of the respective fieldbus component (5),
and wherein the aggregator device comprises a firewall, and the at least one host computer can be registered with the firewall of the aggregator device so that access from the at least one host computer to the various network segments (2-1, 2-2, 2-3) is permitted.

2. Aggregator device according to claim 1, **characterized by** at least one of the following:
• the aggregator device is designed to provide unified access to a fieldbus system comprising multiple network segments;
• the aggregator device is designed to selectively forward the second data traffic received from a fieldbus component in one of the network segments to the host computer or to the host computers for which the second data traffic is intended;
• the aggregator device is implemented as a standalone aggregation device or as a software module executable on a computer.

3. Aggregator device according to claim 1 or claim 2, **characterized by** at least one of the following:
• the plurality of first data connections comprises at least one of the following: at least one wireless data connection, at least one wired data connection;
• the at least one second data connection comprises at least one of the following: at least one wireless data connection, at least one wired data connection.

4. Aggregator device according to any of claims 1 to 3, **characterized in that** the aggregator device is designed to forward the first data traffic to a field access device of that network segment in which the respective fieldbus component indicated as the destination address of the first data traffic is located.

5. Aggregator device according to any of claims 1 to 4, **characterized in that** routing information is stored on the side of the aggregator device, which indicates to which network segment first data traffic addressed to a particular fieldbus component is to be routed.

6. Aggregator device according to claim 5, **characterized by** at least one of the following:
• the aggregator device is designed to forward first data traffic received from at least one of the host computers to that network segment in which the fieldbus component to which the first data traffic is addressed is located, based on the routing information;
• the routing information comprises topology information specifying the topology of the network segments connected to the aggregator device;
• at least one of the field access devices is designed to determine topology information for the associated network segment by means of a scan and to transmit the topology information to the aggregator device;
• at least one of the field access devices is designed to determine the fieldbus components present in the associated network segment by means of a scan;
• at least one of the field access devices is designed to determine the fieldbus components present in the associated network segment by means of a scan and to transmit the scan results as at least one file from the respective field access device to the aggregator device;
• the at least one field access device is designed to automatically perform a scan of the associated network segment at predetermined time intervals;
• the aggregator device is designed to initiate a scan on the side of the at least one field access device.

7. Aggregator device according to claim 5, **characterized by** at least one of the following:
• the routing information comprises assignment information which assigns the fieldbus components to the various network segments;
• the routing information comprises assignment information which indicates, for at least some of the fieldbus components, in which network segment the respective fieldbus component is located.

8. Aggregator device according to any of claims 1 to 7, **characterized by** at least one of the following:
• the aggregator device is designed to authenticate the at least one host computer;
• the aggregator device is designed to authorize the at least one host computer;
• the aggregator device is designed to assign access rights to the at least one host computer for full or partial access to certain network segments and/or certain fieldbus components and/or certain functionalities of fieldbus components;
• the aggregator device comprises an encryption/decryption unit for encrypting and decrypting data traffic exchanged with the at least one host computer.

9. A field bus system (20), comprising:
a plurality of network segments (2-1, 2-2, 2-3), each network segment (2-1, 2-2, 2-3) comprising at least one field access device (3-1, 3-2, 3-3), at least one fieldbus (4, 10, 13), and at least one fieldbus component (5-9, 11, 12, 14, 15),
the at least one field access device (3-1, 3-2, 3-3) being designed to enable access to fieldbus components (5-9, 11, 12, 14, 15) in the respective network segment (2-1, 2-2, 2-3),
and an aggregator device (21) according to any of claims 1 to 8, which is designed to establish a plurality of first data connections (22-1, 22-2, 22-3) to at least some of the field access devices (3-1, 3-2, 3-3) in different network segments (2-1, 2-2, 2-3).

10. Fieldbus system according to claim 9, **characterized in that** the fieldbus system is designed such that the aggregator device and the associated field access devices mutually inform each other of their respective device identifiers and/or device identifiers of the field access devices connected to the aggregator device are stored in the aggregator device,
wherein the aggregator device is designed to identify itself to the field access devices connected to the aggregator device,
and/or the fieldbus system additionally comprises at least one host computer connected to the aggregator device via at least one data connection.

11. Fieldbus system according to claim 9 or 10, **characterized by** at least one of the following:
• the plurality of first data connections are Ethernet connections;
• the at least one second data connection is at least one Ethernet connection;
• the device identifiers of the field access devices are IP addresses of the field access devices;
• a device identifier of the aggregator device is an IP address of the aggregator device.

12. Fieldbus system according to any of claims 9 to 11, **characterized by** at least one of the following:
• at least one of the field access devices connected to the aggregator device is designed to transmit broadcast messages according to a predetermined time schedule, the aggregator device being designed to receive the broadcast messages from the field access devices connected to it and to identify these field access devices based on the received broadcast messages;
• at least one of the field access devices connected to the aggregator device is designed to transmit broadcast messages according to a predetermined time schedule, the aggregator device being designed to receive the broadcast messages and to identify the field access devices connected to it, wherein the at least one field access device is designed to transmit a device identifier of the field access device to the aggregator device in the broadcast message;
• at least one of the field access devices connected to the aggregator device is designed to transmit broadcast messages according to a predetermined time schedule, the aggregator device being designed to receive the broadcast messages and to identify the field access devices connected to it, wherein the aggregator device is designed to identify itself to the field access devices upon receipt of a broadcast message.

13. Fieldbus system according to any of claims 9 to 12, **characterized by** at least one of the following:
• the aggregator device is designed to transmit broadcast messages according to a predetermined time schedule, the field access devices being designed to receive the broadcast messages from the aggregator device and to identify the aggregator device based on the received broadcast messages;
• the aggregator device is designed to transmit broadcast messages according to a predetermined time schedule, the field access devices being designed to receive the broadcast messages and to identify the aggregator device, wherein the aggregator device is designed to transmit a device identifier of the aggregator device to the field access devices connected to it in the broadcast message;
• the aggregator device is designed to transmit broadcast messages according to a predetermined time schedule, the field access devices being designed to receive the broadcast messages and to identify the aggregator device, wherein the field access devices are designed to identify themselves to the aggregator device upon receipt of a broadcast message.

14. Fieldbus system according to any of claims 9 to 13, **characterized by** at least one of the following:
• on the side of the field access devices, a device identifier of the aggregator device is stored in the respective field access device, the field access devices being designed to identify themselves to the aggregator device to which they are connected;
• at least one of the field access devices comprises a setting element allowing a selection as to whether an aggregator device is present in the fieldbus system to which the field access device is connected, or whether no such aggregator device is present and data exchange takes place directly with at least one host computer;
• at least one of the field access devices comprises a setting element allowing a selection as to whether an aggregator device is present, wherein the setting element is implemented in hardware;
• on the side of the field access devices, starting from the local domain of the fieldbus system, a name of the aggregator device can be generated using a predetermined naming rule, the name being usable for addressing the aggregator device;
• on the side of the field access devices, a name of the aggregator device can be generated using a predetermined naming rule, wherein the respective field access device is designed to assemble a predetermined name component with the local domain of the fieldbus system to form the name of the aggregator device.

15. Fieldbus system according to any of claims 9 to 14, **characterized by** at least one of the following:
• a device access software is installed on the side of the at least one host computer;
• the device access software is a device access software according to one of the following standards: FDT, FDT2, FDI Device Packages, OPC Unified Architecture.

## Revendications

1. Un dispositif d'agrégation (21), conçu pour établir une pluralité de premières connexions de données (22-1, 22-2, 22-3) vers une pluralité de dispositifs d'accès terrain (3-1, 3-2, 3-3), les dispositifs d'accès terrain (3-1, 3-2, 3-3) étant connectés à une pluralité de segments de réseau différents (2-1, 2-2, 2-3) d'un système de bus de terrain (20),
le dispositif d'agrégation (21) étant conçu pour établir au moins une seconde connexion de données (23) vers au moins un ordinateur hôte (16, 18, 19),
le dispositif d'agrégation (21) étant conçu pour recevoir, via au moins l'une des secondes connexions de données (23), un premier trafic de données (26) provenant dudit ordinateur hôte (16, 18, 19), et pour retransmettre ce premier trafic de données (26) via au moins l'une des premières connexions de données (22-1, 22-2, 22-3) vers un dispositif d'accès terrain (3-1) du segment de réseau (2-1) dans lequel se trouve le composant de bus de terrain (5) auquel le premier trafic de données (26) est destiné,
le premier trafic de données (26) étant un trafic destiné au paramétrage, à la configuration et à la surveillance d'état d'un composant de bus de terrain (5),
et le dispositif d'agrégation (21) étant conçu pour recevoir, d'un composant de bus de terrain (5) dans l'un des segments de réseau (2-1, 2-2, 2-3), via au moins l'une des premières connexions de données (22-1, 22-2, 22-3), un second trafic de données (27) et pour retransmettre ce second trafic de données (27) via au moins l'une des secondes connexions de données (23) à au moins un des ordinateurs hôtes (16, 18, 19),
le second trafic de données (27) reçu depuis un composant de bus de terrain (5) comprenant au moins une valeur de paramètre du composant de bus de terrain (5),
le dispositif d'agrégation comprenant un pare-feu, et l'au moins un ordinateur hôte pouvant être enregistré auprès du pare-feu du dispositif d'agrégation, de sorte qu'un accès depuis l'ordinateur hôte aux différents segments de réseau (2-1, 2-2, 2-3) est autorisé.

2. Dispositif d'agrégation selon la revendication 1, **caractérisé par** au moins l'un des éléments suivants :
• le dispositif d'agrégation est conçu pour fournir un accès unifié à un système de bus de terrain comprenant plusieurs segments de réseau ;
• le dispositif d'agrégation est conçu pour retransmettre sélectivement le second trafic de données reçu depuis un composant de bus de terrain dans un segment de réseau vers l'ordinateur hôte ou les ordinateurs hôtes auxquels ce second trafic est destiné ;
• le dispositif d'agrégation est réalisé en tant qu'appareil autonome d'agrégation ou sous forme de module logiciel exécutable sur un ordinateur.

3. Dispositif d'agrégation selon la revendication 1 ou 2, **caractérisé par** au moins l'un des éléments suivants :
• la pluralité de premières connexions de données comprend au moins : une connexion de données sans fil, une connexion de données filaire ;
• la ou les secondes connexions de données comprennent au moins : une connexion de données sans fil, une connexion de données filaire.

4. Dispositif d'agrégation selon l'une quelconque des revendications 1 à 3, **caractérisé en ce que** le dispositif d'agrégation est conçu pour retransmettre le premier trafic de données, en fonction du composant de bus de terrain indiqué comme adresse de destination du premier trafic, vers un dispositif d'accès terrain du segment de réseau dans lequel se trouve ce composant.

5. Dispositif d'agrégation selon l'une quelconque des revendications 1 à 4, **caractérisé en ce que** des informations de routage sont enregistrées du côté du dispositif d'agrégation, indiquant vers quel segment de réseau doit être routé un premier trafic de données adressé à un composant de bus de terrain donné.

6. Dispositif d'agrégation selon la revendication 5, **caractérisé par** au moins l'un des éléments suivants :
• le dispositif d'agrégation est conçu pour retransmettre un premier trafic de données reçu depuis au moins un des ordinateurs hôtes vers le segment de réseau dans lequel se trouve le composant de bus de terrain auquel ce trafic est destiné, sur la base des informations de routage ;
• les informations de routage comprennent des informations de topologie spécifiant la topologie des segments de réseau connectés au dispositif d'agrégation ;
• au moins un des dispositifs d'accès terrain est conçu pour déterminer, au moyen d'un balayage, des informations de topologie pour le segment de réseau associé et pour les transmettre au dispositif d'agrégation ;
• au moins un des dispositifs d'accès terrain est conçu pour déterminer, au moyen d'un balayage, les composants de bus de terrain présents dans le segment associé ;
• au moins un des dispositifs d'accès terrain est conçu pour déterminer, par balayage, les composants présents et pour transmettre les résultats sous forme d'au moins un fichier au dispositif d'agrégation ;
• le ou les dispositifs d'accès terrain sont conçus pour effectuer automatiquement un balayage du segment de réseau associé à intervalles prédéfinis ;
• le dispositif d'agrégation est conçu pour déclencher un balayage du côté du ou des dispositifs d'accès terrain.

7. Dispositif d'agrégation selon la revendication 5, **caractérisé par** au moins l'un des éléments suivants :
• les informations de routage comprennent des informations d'affectation associant les composants de bus de terrain aux différents segments de réseau ;
• les informations de routage comprennent des informations d'affectation indiquant, pour au moins une partie des composants de bus de terrain, dans quel segment de réseau ils se trouvent.

8. Dispositif d'agrégation selon l'une quelconque des revendications 1 à 7, **caractérisé par** au moins l'un des éléments suivants :
• le dispositif d'agrégation est conçu pour authentifier l'au moins un ordinateur hôte ;
• le dispositif d'agrégation est conçu pour autoriser l'au moins un ordinateur hôte ;
• le dispositif d'agrégation est conçu pour attribuer à l'au moins un ordinateur hôte des droits d'accès pour un accès total ou partiel à certains segments de réseau et/ou à certains composants de bus de terrain et/ou à certaines fonctionnalités de composants de bus de terrain ;
• le dispositif d'agrégation comprend une unité de chiffrement/déchiffrement pour chiffrer et déchiffrer le trafic de données échangé avec l'ordinateur hôte.

9. Un système de bus de terrain (20), comprenant :
une pluralité de segments de réseau (2-1, 2-2, 2-3), chaque segment comprenant au moins un dispositif d'accès terrain (3-1, 3-2, 3-3), au moins un bus de terrain (4, 10, 13) et au moins un composant de bus de terrain (5 à 9, 11, 12, 14, 15),
le ou les dispositifs d'accès terrain (3-1, 3-2, 3-3) étant conçus pour permettre l'accès aux composants de bus de terrain dans le segment concerné,
et un dispositif d'agrégation (21) selon l'une quelconque des revendications 1 à 8, conçu pour établir une pluralité de premières connexions de données (22-1, 22-2, 22-3) avec certains des dispositifs d'accès terrain dans différents segments.

10. Système de bus de terrain selon la revendication 9, **caractérisé en ce que** le système est conçu de sorte que le dispositif d'agrégation et les dispositifs d'accès terrain associés s'informent mutuellement de leurs identifiants d'appareil respectifs et/ou que les identifiants des dispositifs d'accès terrain connectés au dispositif d'agrégation soient enregistrés dans celui-ci, le dispositif d'agrégation étant conçu pour s'identifier auprès des dispositifs d'accès terrain qui lui sont connectés,
et/ou le système comprenant en outre au moins un ordinateur hôte connecté au dispositif d'agrégation via au moins une connexion de données.

11. Système de bus de terrain selon la revendication 9 ou 10, **caractérisé par** au moins l'un des éléments suivants :
• les premières connexions de données sont des connexions Ethernet ;
• la ou les secondes connexions de données sont des connexions Ethernet ;
• les identifiants des dispositifs d'accès terrain sont des adresses IP de ces dispositifs ;
• l'identifiant du dispositif d'agrégation est une adresse IP du dispositif d'agrégation.

12. Système de bus de terrain selon l'une quelconque des revendications 9 à 11, **caractérisé par** au moins l'un des éléments suivants :
• au moins un des dispositifs d'accès terrain connectés au dispositif d'agrégation est conçu pour émettre des messages broadcast selon une cadence temporelle prédéfinie, le dispositif d'agrégation étant conçu pour recevoir ces messages et identifier les dispositifs d'accès terrain correspondants ;
• au moins un des dispositifs d'accès terrain est conçu pour transmettre un identifiant d'appareil dans le message broadcast ;
• le dispositif d'agrégation est conçu pour s'identifier auprès des dispositifs d'accès terrain suite à la réception d'un message broadcast.

13. Système de bus de terrain selon l'une quelconque des revendications 9 à 12, **caractérisé par** au moins l'un des éléments suivants :
• le dispositif d'agrégation est conçu pour émettre des messages broadcast selon une cadence prédéfinie, les dispositifs d'accès terrain étant conçus pour recevoir ces messages et identifier le dispositif d'agrégation ;
• le dispositif d'agrégation est conçu pour inclure son identifiant dans le message broadcast destiné aux dispositifs d'accès terrain ;
• les dispositifs d'accès terrain sont conçus pour s'identifier en retour auprès du dispositif d'agrégation suite à la réception d'un message broadcast.

14. Système de bus de terrain selon l'une quelconque des revendications 9 à 13, **caractérisé par** au moins l'un des éléments suivants :
• un identifiant du dispositif d'agrégation est enregistré dans chaque dispositif d'accès terrain, permettant à ceux-ci de s'identifier auprès du dispositif d'agrégation auquel ils sont connectés ;
• au moins un dispositif d'accès terrain comprend un élément de réglage permettant de sélectionner si un dispositif d'agrégation est présent dans le système ou si l'échange de données doit s'effectuer directement avec un ordinateur hôte ;
• l'élément de réglage est réalisé matériellement ;
• un nom du dispositif d'agrégation peut être généré à partir du domaine local du système de bus de terrain selon une règle de formation prédéfinie, ce nom étant utilisable pour l'adressage ;
• un dispositif d'accès terrain est conçu pour assembler un élément de nom prédéfini avec le domaine local afin de générer le nom du dispositif d'agrégation.

15. Système de bus de terrain selon l'une quelconque des revendications 9 à 14, **caractérisé par** au moins l'un des éléments suivants :
• un logiciel d'accès aux appareils est installé sur au moins un des ordinateurs hôtes ;
• le logiciel d'accès aux appareils est conforme à l'une des normes suivantes : FDT, FDT2, FDI Device Packages, OPC Unified Architecture.
